**Europäisches Patentamt**

**European Patent Office**

**Office européen des brevets**

(19)

(11) Veröffentlichungsnummer : **0 387 748 B1**

(12)

# EUROPÄISCHE PATENTSCHRIFT

(45) Veröffentlichungstag der Patentschrift :
**21.07.93 Patentblatt 93/29**

(51) Int. Cl.$^5$ : **C09K 3/14**

(21) Anmeldenummer : **90104621.9**

(22) Anmeldetag : **12.03.90**

(54) **Hydrophob beschichtetes Schleifkorn.**

(30) Priorität : **13.03.89 CH 927/89**

(43) Veröffentlichungstag der Anmeldung :
**19.09.90 Patentblatt 90/38**

(45) Bekanntmachung des Hinweises auf die
Patenterteilung :
**21.07.93 Patentblatt 93/29**

(84) Benannte Vertragsstaaten :
**AT CH DE ES FR GB IT LI NL SE**

(56) Entgegenhaltungen :
**EP-A- 0 304 616**
**FR-A- 851 453**
**US-A- 2 150 166**
**JAPANESE PATENT OFFICE, file supplier**
**JAPS, Tokyo, JP; & JP-A-62 001 117**

(73) Patentinhaber : **LONZA AG**
**Gampel/Wallis (CH)**

(72) Erfinder : **Kunz, Reiner, Dr.**
**Königsbergerstrasse 33**
**Waldshut-Tiengen (DE)**
Erfinder : **Strittmatter, Rudolf**
**Zelgweg 13**
**Waldshut-Tiengen (DE)**

(74) Vertreter : **Weinhold, Peter, Dr. et al**
**Patentanwälte Dipl.-Ing. G. Dannenberg Dr. P.**
**Weinhold Dr. D. Gudel Dipl.-Ing. S. Schubert**
**Dr. P. Barz Siegfriedstrasse 8**
**W-8000 München 40 (DE)**

## Beschreibung

Die Erfindung betrifft ein hydrophob beschichtetes Schleifkorn auf Basis von Korund oder Siliciumcarbid, dessen Verwendung in kunstharzgebundenen Schleifmitteln, sowie ein Verfahren zu seiner Herstellung.

Die Leistungsfähigkeit von elastisch oder starr gebundenen Schleifmitteln wird nicht allein durch die Härte und Zähigkeit des Schleifkorns, sondern in erheblichem Masse auch durch die Festigkeit der Bindung bestimmt. Bei kunstharzgebundenen Schleifmitteln stellt die für das Nassschleifen unerlässliche Wasserbeständigkeit der Bindung ein erhebliches technisches Problem dar. Die am häufigsten verwendeten Schleifkörner auf Korund- oder Sililciumcarbidbasis sind ohne besondere Vorbehandlung gut wasserbenetzbar, was ein Eindringen von Wasser zwischen Korn und Bindemittel ermöglicht und eine Schwächung der Bindung nach Lagerung oder Gebrauch unter Wasser zur Folge hat.

Es hat daher nicht an Versuchen gefehlt, Schleifkorn durch eine Oberflächenbehandlung hydrophob, also wasserabweisend zu machen, um diesen Abfall der Bindungsfestigkeit bei Wassereinwirkung zu verhindern oder wenigstens herabzusetzen. Dies gelingt teilweise durch Behandlung mit Silanen, wie beispielsweise (3-Aminopropyl)-triethoxy-silan, wie dies in der Firmenschrift SF-1159 der Union Carbide Corp. (Silicons Division) beschrieben ist. Es hat sich jedoch gezeigt, dass die so erreichbare Verbesserung der Eigenschaften des Schleifkorns nicht von Dauer ist, sondern vielmehr nach wenigen Monaten Lagerzeit wieder verschwindet. Das so behandelte Schleifkorn musste daher möglichst rasch weiterverarbeitet werden, was zur Folge hatte, dass die Behandlung zweckmässig erst beim Schleifmittelhersteller und in kleineren Chargen vorgenommen wurde und nicht bereits in grossen Chargen beim Schleifkornhersteller, was an sich wirtschaftlicher wäre. Weiterhin ist das Verfahren selbst nicht so problemlos, wie es zunächst den Anschein hat. Feine Körnungen (z.B. F120 bis F1200) neigen zur Agglomeratbildung. Die Bedingungen bei der nach der Benetzung des Schleifkorns mit der Silanlösung erforderlichen Trocknung müssen genau eingehalten werden, um Hydrolyse oder thermische Zersetzung zu vermeiden, und schliesslich ist das Silan toxikologisch keineswegs unbedenklich, was bei den oft nicht für die Handhabung gefährlicher Stoffe eingerichteten Schleifmittelherstellern zu Umwelt- und Sicherheitsproblemen führt.

Aufgabe der Erfindung war es daher, ein Schleifkorn zur Verfügung zu stellen, das dauerhaft hydrophobiert ist und eine gute Einbindung in Kunstharzmassen, welche auch bei Wassereinwirkung nicht wesentlich verringert wird, erlaubt.

Aufgabe der Erfindung war weiterhin, ein Verfahren aufzuzeigen, das auf einfache und kostengünstige Weise, ohne Gefährdung des Personals und der Umwelt, die Herstellung dieses Schleifkorns erlaubt.

Erfindungsgemäss wird diese Aufgabe durch das Schleifkorn nach Patentanspruch 1 und die Verfahren nach Patentansprüchen 6 und 7 gelöst.

Es wurde gefunden, dass Schleifkorn auf Basis von Korund, worunter alle Arten von Elektrokorund, wie Normalkorund, Blaukorund, Halbedelkorund und Edelkorund, Zirkonkorund sowie Sinterkorund zu verstehen sind, ebenso wie Schleifkorn auf Basis von Siliciumcarbid oder Kornmischungen durch Beschichtung mit hochdispersem hydrophobem Siliciumdioxid ohne Verwendung eines Bindemittels und ohne Hochtemperaturbehandlung dauerhaft hydrophobiert werden kann. Die Herabsetzung oder sogar Aufhebung der Benetzbarkeit durch Wasser, wie sie mit der Steighöhenbestimmung nach FEPA gemessen wird, war aufgrund der bekannten Eigenschaften des hochdispersen hydrophoben Siliciumdioxids zu erwarten. Völlig überraschend war jedoch, dass das nur oberflächlich anhaftende Siliciumdioxid bei mechanischer Belastung nicht einfach abfällt und so die Festigkeit von Probekörpern oder Schleifkörpern herabsetzt, sondern im Gegenteil die Festigkeit sogar erhöht.

Die Menge des aufgebrachten hochdispersen hydrophoben Siliciumdioxids beträgt zweckmässig 0,001 bis 5,0% und vorzugsweise 0,1 bis 1,0%, jeweils bezogen auf das Gewicht des Schleifkorns. Die optimale Menge hängt von der Korngrösse und damit der spezifischen Oberfläche des Schleifkorns ab, wobei sich die vorteilhafte Wirkung jedoch bei Ueberschreiten der optimalen Menge über einen relativ grossen Bereich kaum verändert, so dass keine genaue Dosierung erforderlich ist.

Das hochdisperse hydrophobe Siliciumdioxid besitzt vorzugsweise eine mittlere Partikelgrösse der Primärteilchen (angegeben als $d_{50}$-Wert) von 5 bis 100 nm und eine spezifische Oberfläche (nach BET) von 80 bis 300 $m^2$/g. Besonders bevorzugt sind Produkte mit einer mittleren Primärpartikelgrösse von 7 bis 20 nm und einer spezifischen Oberfläche von 100 bis 150 $m^2$/g. Ein derartiges Produkt wird beispielsweise von der Firma Degussa unter der Bezeichnung Aerosil (R) R 972 oder Aerosil (R) R 812 oder von der Fa. Cabot unter der Bezeichnung Cab-o-sil TS 720 (R) vertrieben.

Eine weitere Verbesserung der Eigenschaften des erfindungsgemässen Schleifkorns kann durch eine zusätzliche Behandlung mit einem Silan der allgemeinen Formel $H_2N-(CH_2)_n-Si(OR)_3$, worin n eine ganze Zahl von 2 bis 4 und R eine Alkylgruppe mit 1 bis 4 Kohlenstoffatomen ist, erreicht werden. Diese Behandlung wird in an sich bekannter Weise zweckmässig an dem bereits erfindungsgemäss beschichteten Schleifkorn vorgenommen. Für diese Nachbehandlung gelten jedoch die eingangs beschriebenen Einschränkungen bezüglich der Dauerhaftigkeit der erreichten zusätzlichen Verbesserung und der Nachteile bei der Durchführung des Verfahrens.

Die Herstellung des erfindungsgemäss beschichteten Schleifkorns erfolgt vorzugsweise durch einfaches Mischen von handelsüblichem unbehandeltem Schleifkorn der gewünschten Körnung mit der entsprechenden Menge des hochdispersen hydrophoben Siliciumdioxids. Der Mischvorgang kann unter Verwendung eines handelsüblichen Mischers (z.B. Taumelmischer, Drehmischer, Freifallmischer) und ohne weitere Zusätze erfolgen. Es ist auch möglich, das hochdisperse hydrophobe Siliciumdioxid in einer geeigneten nichtwässrigen Flüssigkeit zu suspendieren und durch Mischen des unbehandelten Schleifkorns mit der Suspension oder Besprühen mit der Suspension und anschliessendes Verdampfen der Flüssigkeit auf das Schleifkorn aufzubringen. Zum Suspendieren des hochdispersen hydrophoben Siliciumdioxids eignen sich beispielsweise flüssige Kohlenwasserstoffe und deren Gemische wie Benzin, aber auch Ketone wie Aceton, Alkohole wie Isopropanol, oder Ester wie Ethylacetat.

Das erfindungsgemässe Schleifkorn eignet sich vorzugsweise zur Verwendung in kunstharzgebundenen Schleifmitteln, wie Schleifund Trennscheiben oder Schruppscheiben, und zwar insbesondere für solche, die zum Nassschleifen eingesetzt werden. Es liegt jedoch auch im Rahmen der Erfindung, Schleifmittel auf Unterlage, wie Schleifbänder, mit dem erfindungsgemässen Schleifkorn herzustellen.

Die nachfolgenden Beispiele veranschaulichen die Ausführung der Erfindung und die Eigenschaften des erfindungsgemässen Schleifkorns.

## Beispiel 1

(Herstellung des beschichteten Schleifkorns durch Trockenmischung)

In einem Taumelmischer wurden 100 kg unbehandeltes Schleifkorn mit 0,5 kg (0,5 Gew.%) hochdisperser hydrophober Kieselsäure (Degussa Aerosil[R] R 972) 30 min gemischt. Beschichtet wurden folgende Körnungen:

Normalkorund Dural[R] F30 und P120
Blaukorund Dural[R] HT F24
Halbedelkorund Abramant[R] F36
Edelkorund Abramax[R] F46 und F54
Siliciumcarbid Carbogran[R] dunkel F36, F80 und F180

## Beispiel 2

(Silanisierung nach Stand der Technik)

In einem Taumelmischer wurden 100 kg unbehandeltes Schleifkorn mit einer l%igen wässrigen Silanlösung (Silan: A1100 der Firma Union Carbide) 20 min gemischt und anschliessend bei 110-120°C getrocknet. Die Menge der Silanlösung hing von der Korngrösse ab, so wurden z.B. für Korn 24 1,7 l und für Korn 54 3,6 l benötigt.

## Beispiel 3

(Benetzbarkeitstests)

Mit den gemäss Beispiel 1 behandelten Schleifkörnungen wurde die Kapillaritätsbestimmung nach FEPA-Standard 44-D-1386 durchgeführt. Zum Vergleich wurde der gleiche Test mit den entsprechenden unbehandelten sowie zwei gemäss Beispiel 2 silanisierten Schleifkörnungen durchgeführt. Die gemessenen Steighöhen sind in Tabelle 1 zusammengestellt.

Sämtliche erfindungsgemäss behandelten Körnungen waren praktisch nicht mehr benetzbar (Steighöhe Null).

Tabelle   1

Steighöhen  in  mm  nach  FEPA  44-D-1986

| Kornart | Körnung | unbehandelt | erfindungsgem. (Beispiel 1) | silanisiert (Beispiel 2) |
|---|---|---|---|---|
| Normalkorund | F 30 | $66 \pm 3$ | 0 | $45 \pm 2$ |
|  | P 120 | $190 \pm 5$ | 0 | $162 \pm 4$ |
| Blaukorund | F 24 | $34 \pm 2$ | 0 | – |
| Halbedelkorund | F 36 | $26 \pm 3$ | 0 | – |
| Edelkorund | F 46 | $65 \pm 3$ | 0 | – |
| Siliciumcarbid | F 36 | $46 \pm 3$ | 0 | – |
|  | F 80 | $147 \pm 4$ | 0 | – |
|  | F 180 | $190 \pm 5$ | 0 | – |

Beispiel 4

(Biegebruchfestigkeit)

Mit unbehandelten, erfindungsgemäss nach Beispiel 1 behandelten, nach Beispiel 2 silanisierten sowie erst nach Beispiel 1 und dann zusätzlich nach Beispiel 2 behandelten Schleifkörnungen F 54 aus Edelkorund (Abramax[R]) aus 2 verschiedenen Produktionschargen wurden Teststäbe der Dimension 120 x 60 x 15 mm3 hergestellt. Dazu wurden jeweils 15,8 kg Schleifkorn und 4,2 kg Phenolharzgemisch (30% flüssiges und 70% festes Harz) zu einer homogenen Masse gemischt, in einer Pressform bei 210 bar zu Stäben der gewünschten Grösse gepresst und bei 180°C innerhalb von 7 h ausgehärtet. Die Dichte der fertigen Stäbe betrug 2,7 g/cm2. An jeweils 10 Teststäben wurde die Biegebruchfestigkeit in trockenem Zustand sowie nach 5 Tagen Lagerung in gesättigter Sodalösung von 40°C bestimmt.
Die gefundenen Werte sind in Tabelle 2 aufgeführt.

Tabelle 2

Biegebruchfestigkeiten (in N/cm2) der Korundkörnungen nach Beispiel 4 (Mittelwerte und Streubereiche)

| Korn/ Bedingungen | unbehandelt | erfindungsgem. (Beispiel 1) | silanisiert (Beispiel 2) | erfindungsgem. + silanisiert |
|---|---|---|---|---|
| Charge 1 | | | | |
| trocken | $3510 \pm 140$ | $4350 \pm 150$ | $3550 \pm 100$ | $4370 \pm 120$ |
| nass | $2340 \pm 100$ | $2980 \pm 250$ | $2315 \pm 150$ | $3240 \pm 140$ |
| Charge 2 | | | | |
| trocken | $3890 \pm 260$ | $4800 \pm 190$ | $4010 \pm 130$ | $4480 \pm 190$ |
| nass | $1970 \pm 150$ | $2330 \pm 330$ | $2160 \pm 170$ | $3350 \pm 230$ |

Beispiel 5

(Schleifleistung beim Flachschleifen)

Aus den gleichen Schleifkörnungen wie in Beispiel 4 wurden kunstharzgebundene Schleifscheiben der Dimension 400 x 40 x 40 mm (Form 1) wie folgt hergestellt:

75 Gew.% Schleifkorn, 17 Gew.% Phenolharzmischung (flüssig und fest) und 8 Gew.% Füllstoffe wurden zu einer homogenen rieselfähigen Masse verarbeitet und dann bei 210 bar zu Scheiben gepresst. Diese wurden zur Aushärtung in einem Ofen innerhalb von 10 h auf 180°C erhitzt, 8 h bei dieser Temperatur belassen und dann innerhalb von 6 h auf Raumtemperatur abgekühlt. Die Scheibendichte betrug 2,55 g/cm3.

Ein Teil der Scheiben wurde in gesättigter Sodalösung bei 40°C 7 Tage gelagert.

Die Schleifleistung wurde beim Flachschleifen an Chromnickelstahl (18/8) ermittelt und auf übliche Weise als G-Faktor angegeben

$$\left[ G = \frac{\text{zerspantes Werkstückvolumen (cm3)}}{\text{Volumenverschleiss der Scheiben (cm3)}} \right]$$

Die so festgestellten Schleifleistungen können der Tabelle 3 entnommen werden.

Tabelle 3

G-Werte der Schleifscheiben nach Beispiel 5

| Korn/<br>Bedingungen | unbehandelt | erfindungsgem.<br>(Beispiel 1) | silanisiert<br>(Beispiel 2) | erfindungsgem.<br>+ silanisiert |
|---|---|---|---|---|
| ohne Aus-<br>lagerung | 7,4 | 8,7 | 8,1 | 8,7 |
| nach Aus-<br>lagerung in<br>Sodalösung | 5,2 | 6,2 | 6,0 | 6,9 |

Beispiel 6

(Schleifleistung beim Trennschleifen)

Aus je einer unbehandelten und einer erfindungsgemäss nach Beispiel 1 behandelten Kornmischung von Halbedelkorund (Abramant), bestehend jeweils aus 25 Gew.% Korn F24, 50 Gew.% Korn F30 und 25 Gew.% Korn F36 wurden kunstharzgebundene Trennschleifscheiben der Dimension 230 x 2,5 x 22 mm wie folgt hergestellt:

65 Gew.% Schleifkornmischung, 20 Gew.% Phenolharzmischung (flüssig und fest) und 15 Gew.% Füllstoffe (Kryolith, Pyrit) wurden zu einer homogenen feuchten Masse vermischt und mit zwei Aussengeweben in einer Pressform bei 270 bar zu Trennschleifscheiben verpresst. Die Scheiben wurden bei 180°C ausgehärtet. Jeweils ein Teil der Scheiben wurde 75 min in siedendem Wasser ausgelagert.

Die Schleifleistung wurde an Flachprofilen aus Chromnickelstahl (18/8, WSt Nr.4305) des Querschnitts 50 x 20 mm2 mit einer handelsüblichen Trennschleifmaschine ermittelt. Pro Scheibe wurden 10 Trennschnitte durchgeführt und danach die Abnahme des Scheibendurchmessers bestimmt.

Tabelle 4 zeigt die Ergebnisse der Tests.

Tabelle 4

Verschleiss der Trennschleifscheiben nach Beispiel 6

| Korn: | | unbehandelt | erfindungsgemäss<br>(Beispiel 1) |
|---|---|---|---|
| Scheibendurch-<br>messerabnahme<br>(mm) | ohne Auslagerung | 8,33 $\pm$ 0,66 | 7,66 $\pm$ 0,57 |
| | mit Auslagerung | 12,66 $\pm$ 0,57 | 10,66 $\pm$ 0,57 |
| mittlere Verschleisszunahme<br>durch Auslagerung (mm) | | 4,33 | 3,00 |
| Relative Verschleisszunahme | | 100% | 70% |

Beispiel 7

(Schleifleistung beim Trennschleifen)

Aus je einer Siliciumcarbid-Kornmischung der Körnung 0,4-1,0 mm (Carbogran [R]) wurden analog zu Beispiel 6 Trennschleifscheiben hergestellt und zum Teil in siedendem Wasser ausgelagert. Die Zusammensetzung lautete:

75 Gew.% Siliciumcarbid 0,4-1,0 mm
15 Gew.% Phenolharzmischung (flüssig und fest)
10 Gew.% Füllstoffe (Kryolith, Pyrit)

Der Scheibenpressdruck betrug 200 bar, die Aushärtung erfolgte bei 190°C.

Die Schleifleistung wurde an vibrationsverdichteten Betonbarren des Querschnitts 80 x 60 mm2 ermittelt. Hierzu wurden pro Scheibe 5 Trennschnitte mit einer handelsüblichen Trennschleifmaschine durchgeführt und anschliessend die Abnahme des Scheibendurchmessers bestimmt.

Die Ergebnisse können der Tabelle 5 entnommen werden.

## Tabelle 5

### Verschleiss der Trennschleifscheibe nach Beispiel 7

| Korn: | | unbehandelt | erfindungsgemäss (Beispiel 1) |
|---|---|---|---|
| Scheibendurchmesserabnahme (mm) | ohne Auslagerung | $9,6 \pm 0,5$ | $8,3 \pm 0,5$ |
| | mit Auslagerung | $13,2 \pm 0,7$ | $11,2 \pm 0,7$ |
| mittlere Verschleisszunahme durch Auslagerung (mm) | | 3,6 | 2,9 |
| Relative Verschleisszunahme | | 100% | 80% |

## Patentansprüche

1. Schleifkorn auf Basis von Korund oder Siliciumcarbid, gekennzeichnet durch eine bindemittelfreie unverschmolzene Beschichtung aus 0,001 bis 5,0%, bezogen auf das Gewicht des Schleifkorns, hochdispersem hydrophobem Siliciumdioxid.

2. Schleifkorn nach Patentanspruch 1, dadurch gekennzeichnet, dass das hochdisperse hydrophobe Siliciumdioxid in einer Menge von 0,1 bis 1,0%, bezogen auf das Gewicht des Schleifkorns, aufgebracht ist.

3. Schleifkorn nach mindestens einem der Patentansprüche 1-2, dadurch gekennzeichnet, dass das hochdisperse hydrophobe Siliciumdioxid in einer Partikelgrösse der Primärteilchen von 5 bis 100 nm im $d_{50}$-Wert und einer spezifischen Oberfläche von 80 bis 300 m2/g nach BET vorliegt.

4. Schleifkorn nach Patentanspruch 3, dadurch gekennzeichnet, dass die Partikelgrösse der Primärteilchen 7 bis 20 nm im $d_{50}$-Wert und die spezifische Oberfläche 100 bis 150 m2/g nach BET beträgt.

5. Schleifkorn nach mindestens einem der Patentansprüche 1 bis 4, dadurch gekennzeichnet, dass es zusätzlich mit einem Silan der allgemeinen Formel

$$H_2N\text{-}(CH_2)_n\text{-}Si(OR)_3$$

mit n = 2-4 und R = $C_1$-$C_4$-Alkyl, behandelt wurde.

6. Verfahren zur Herstellung des Schleifkorns nach mindestens einem der Patentansprüche 1-5, dadurch gekennzeichnet, dass unbehandeltes Schleifkorn auf Basis von Korund oder Silciumcarbid durch Mischen in trockenem Zustand mit dem hochdispersen hydrophoben Siliciumdioxid beschichtet wird.

7. Verfahren zur Herstellung des Schleifkorns nach mindestens einem der Patentansprüche 1-5, dadurch gekennzeichnet, dass unbehandeltes Schleifkorn auf Basis von Korund oder Siliciumcarbid durch Mischen oder Besprühen mit einer Suspension des hochdispersen hydrophoben Siliciumdioxids in einer verdampfbaren Flüssigkeit und anschliessendes Trocknen beschichtet wird.

8. Verwendung des Schleifkorns nach mindestens einem der Patentansprüche 1-5 in kunstharzgebundenen Schleifmitteln, insbesondere zum Naßschleifen.

## Claims

1. An abrasive particle on the basis of corundum or silicon carbide, characterized by an unmelted coating free of binding agents of 0.001 to 5.0% highly dispersed hydrophobic silicon dioxide, based on the weight of the abrasive particle.

2. An abrasive particle according to claim 1, characterized in that the highly dispersed hydrophobic silicon dioxide is applied in a quantity of 0.1 to 1.0% based on the weight of the abrasive particle.

3. An abrasive particle according to either claim 1 or claim 2, characterized in that the highly dispersed hydrophobic silicon dioxide has a grain size of the primary particles of 5 to 100 nm in the $d_{50}$ value and a specific surface area of 80 to 300 $m^2$/g according to BET.

4. An abrasive particle according to claim 3, characterized in that the grain size of the primary particles is 7 to 20 nm in the $d_{50}$ value and the specific surface area is 100 to 150 $m^2$/g according to BET.

5. An abrasive particle according to at least one of the claims 1 to 4, characterized in that it was additionally treated with a silane of the general formula $H_2N\text{-}(CH_2)_n\text{-}Si(OR)_3$ wherein n = 2-4 and R = $C_1$-$C_4$-alkyl.

6. A process for the preparation of the abrasive particle according to at least one of the claims 1 to 5, characterized in that untreated abrasive particle on the basis of corundum or silicon carbide is coated by mixing it in a dry state with the highly dispersed hydrophobic silicon dioxide.

7. A process for the preparation of the abrasive particle according to at least one of the claims 1 to 5, characterized in that untreated abrasive particle on the basis of corundum or silicon carbide is coated by mixing or spraying it with a suspension of the highly dispersed hydrophobic silicon dioxide in a vaporizable liquid and then drying it.

8. The use of the abrasive particle according to at least one of the claims 1 to 5 in synthetic resin bonded abrasives, especially for wet grinding.

## Revendications

1. Particule abrasive à base de corindon ou de carbure de silicium, caractérisée par un revêtement non fondu sans liant constitué par 0,001 jusqu'à 5,0 %, rapportés au poids de la particule abrasive, d'un dioxyde de silicium hydrophobe à forte dispersion.

2. Particule abrasive selon la revendication 1, caractérisée en ce que'le dioxyde de silicium hydrophobe à forte dispersion est appliqué dans une quantité de 0,1 jusqu'à 1,0 %, rapporté au poids de la particule abrasive.

3. Particule abrasive selon au moins l'une des revendications 1-2, caractérisée en ce que le dioxyde de silicium hydrophobe à forte dispersion se présente dans une granulométrie des particules primaires de 5 à 100 nm en valeur $d_{50}$ et une surface spécifique de 80 jusqu'à 300 m²/g selon BET.

4. Particule abrasive selon la revendication 3, caractérisée en ce que la granulométrie des particules primaires est de 7 à 20 nm en valeur $d_{50}$ et la surface spécifique de 100 à 150 m²/g selon BET.

5. Particule abrasive selon au moins l'une des revendications 1 à 4, caractérisée en ce qu'elle a de plus été traitée avec un silane de la formule générale

$$H_2N\text{-}(CH_2)_n\text{-}Si(OR)_3$$

avec n = 2-4 et R = alkyle en $C_1$-$C_4$.

6. Procédé pour la préparation de la particule abrasive selon au moins l'une des revendications 1-5, caractérisé en ce que la particule abrasive non traitée à base de corindon ou de carbure de silicium est revêtue par mélange à l'état sec de dioxyde de silicium hydrophobe à forte dispersion.

7. Procédé pour la préparation de la particule abrasive selon au moins l'une des revendications 1-5, caractérisé en ce que la particule abrasive non traitée à base de corindon ou de carbure de silicium est revêtue par mélange ou pulvérisation de dioxyde de silicium hydrophobe à forte dispersion dans 'un liquide évaporable et par évaporation consécutive.

8. Utilisation de la particule abrasive selon au moins l'une des revendications 1-5 dans un agent abrasif lié à la résine synthétique, notamment pour le meulage ou l'abrasion par voie humide.